Europäisches Patentamt

European Patent Office

Office européen des brevets

(19)

(11) Numéro de publication: **0 082 050**
**B1**

(12) # FASCICULE DE BREVET EUROPEEN

(45) Date de publication du fascicule du brevet:
14.08.85

(51) Int. Cl.⁴: **G 03 H 1/00**

(21) Numéro de dépôt: **82402214.9**

(22) Date de dépôt: **03.12.82**

(54) **Dispositif de détection hétérodyne d'un image optique.**

(30) Priorité: **07.12.81 FR 8122852**

(43) Date de publication de la demande:
**22.06.83 Bulletin 83/25**

(45) Mention de la délivrance du brevet:
**14.08.85 Bulletin 85/33**

(84) Etats contractants désignés:
**DE GB NL SE**

(56) Documents cités:
**EP - A - 0 040 114**
**EP - A - 0 040 116**

**OPTICS COMMUNICATIONS, vol. 38, no. 4, 15 août 1981, pages 249-254, Amsterdam (NL); J.P. HUIGNARD et al.: "Coherent signal beam amplification in two-wave mixing experiments with photorefractive Bi12Si020 crystals".**

(73) Titulaire: **THOMSON-CSF, 173, Boulevard Haussmann, F-75379 Paris Cedex 08 (FR)**

(72) Inventeur: **Huignard, Jean-Pierre, THOMSON-CSF SCPI 173, bld Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

## Description

La présente invention concerne la détection hétérodyne de l'image optique de cibles se trouvant dans une zone éclairée par un laser.

L'invention s'applique plus particulièrement à la détection d'une image dans le domaine infrarouge par une mosaïque de photodétecteurs.

Il est connu que le rapport signal sur bruit, S/B, des détecteurs infrarouges est généralement limité par le bruit thermique et le courant d'obscurité. Pour ces détecteurs il n'est pas possible, en détection directe, d'atteindre pour le rapport S/B, la valeur limitée par le bruit de grenaille appelé généralement bruit shot. Par contre il est connu que ce rapport limite peut être atteint en superposant au front d'onde reçu des objets éclairés une onde cohérente, d'intensité suffisante, fournie par le laser servant à l'éclairage.

Si la fréquence $F_L$ qui correspond à cette onde de référence est la même que la fréquence $F_S$ utilisée pour l'illumination, on a une détection homodyne. Si les fréquences $F_L$ et $F_S$ sont différentes, la détection sera hétérodyne et le signal électrique de détection est modulé à la fréquence de battement $f = F_L - F_S$.

La détection hétérodyne présente l'avantage, par rapport à la détection homodyne, de permettre par filtrage autour de la fréquence f, d'éliminer les bruits basse fréquence.

Les détecteurs homodyne et hétérodyne ont le désavantage de ne pouvoir être utilisés que pour un champ d'observation d'angle faible qui est typiquement de l'ordre de $10^{-4}$ radians.

Il est connu, par ailleurs, notamment par l'article de J.P. Huignard et A. Marrakchi paru dans «Optics Communications», vol. 38 (1981), p. 249, d'amplifier un front d'onde dans des cristaux photoréfractifs tels que $Bi_{12}SiO_{20}$ (BSO), par un mélange de deux ondes.

La présente invention remédie à l'inconvénient de la détection hétérodyne, par l'utilisation simultanée d'un front d'onde signal amplifié et du front d'onde signal décalé en fréquence. On peut ainsi faire de la détection d'image hétérodyne dans un grand champ angulaire.

Un document connu de l'art antérieur EP-A N° 0040116 décrit un système de détection hétérodyne de l'image optique de cibles éclairées par un faisceau laser cohérent, dans lequel l'onde $\Sigma O$ issue des cibles donne naissance, dans un milieu à variation d'indice de réfraction, à une onde $\Sigma'R$ isomorphe de celle qui émane des cibles et dans lequel l'onde $\Sigma O$ issue des cibles et l'onde $\Sigma'R$ isomorphe ont des fréquences différentes donnant lieu à des battements et sont focalisées par un objectif sur une matrice de photodétecteurs qui détectent à la fréquence de battement.

Par contre, le dispositif de l'invention est un dispositif de détection hétérodyne de l'image optique de cibles éclairées par un laser (La) sur une matrice de photodétecteurs, dans lequel l'onde $\Sigma_1$ issue des cibles donne naissance, dans un milieu à variation d'indice de réfraction, à une onde $\Sigma_2$ isomorphe de celle qui émane des cibles et dans lequel l'onde $\Sigma_1$ issue des cibles et l'onde $\Sigma_2$ isomorphe sont focalisées par un objectif $L_2$ sur la matrice de photodétecteur, caractérisé en ce que le front d'onde $\Sigma_1$ diffusé par les cibles tombe sur un miroir partiellement réfléchissant $m_1$, que le front d'onde transmis par le miroir est amplifié dans ce milieu C, et que le front d'onde réfléchi par le miroir $m_1$ est incident sur des moyens de changement de fréquence $M_2$ fournissant un front d'onde $\Sigma_{1o}$ décalé en fréquence de la valeur f, qu'un deuxième miroir partiellement réfléchissant $m_2$ permet l'interférence entre le front d'onde amplifié $\Sigma_2$ et le front d'onde décalé en fréquence $\Sigma_{1o}$, que l'objectif $L_2$ focalise les fronts d'onde $\Sigma_2$ et $\Sigma_{1o}$ sur la matrice de photodétecteurs et que les signaux fournis par les photodétecteurs sont filtrés par des filtres 10 centrés sur la fréquence de battement f.

D'autres caractéristiques et avantages ressortiront de la description qui va suivre, illustrée par les figures qui représentent:

la fig. 1, un schéma d'hétérodyne optique, suivant l'art antérieur;

la fig. 2, un chéma d'hétérodyne, suivant l'invention;

la fig. 3, un schéma d'amplification optique par un milieu à variation d'indice de réfraction induite.

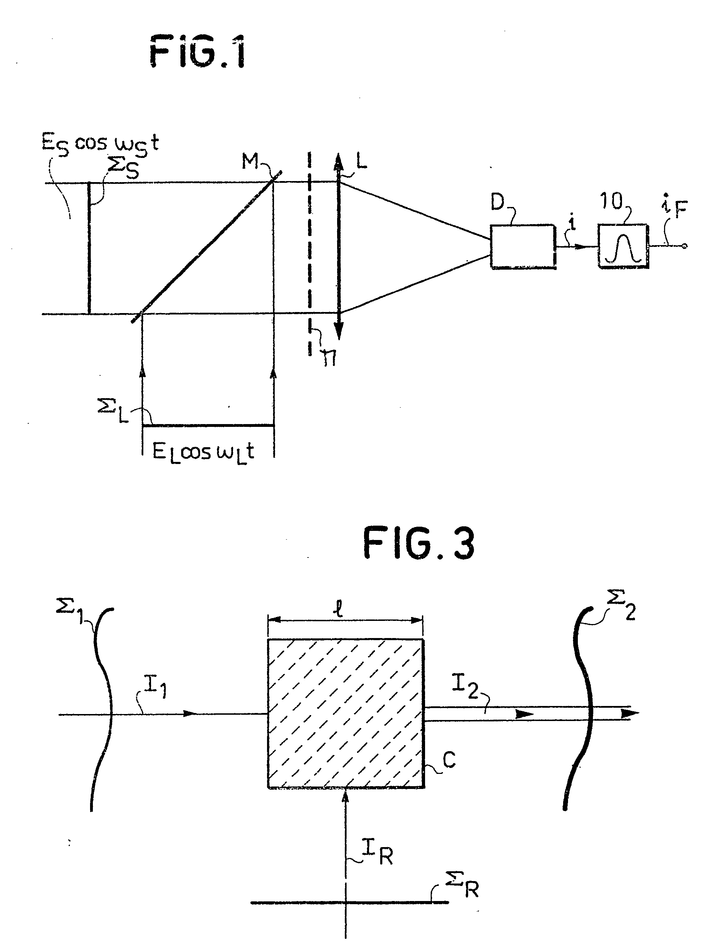

Le schéma de base d'une détection hétérodyne appliquée au domaine optique est indiqué sur la fig. 1. Dans le principe, le dispositif nécessite de disposer d'un oscillateur local cohérent avec le signal optique à détecter; l'oscillateur local et le signal étant à des fréquences légèrement différentes $F_L$ et $F_S$, l'écart de fréquence $f = F_L - F_S$ étant faible par rapport aux fréquences $F_L$ et $F_S$.

Sur cette fig. 1, on a supposé que les fronts d'onde signal et référence, $\Sigma_S$ et $\Sigma_L$, sont plans et rendus parallèles par un miroir semi-transparent m.

Après focalisation par un objectif L, les deux ondes sont reçues par le détecteur quadratique D.

Le courant i fourni par le photodétecteur D sera proportionnel à la moyenne, dans un temps grand par rapport aux périodes optiques, de la somme carrée des champs électriques des deux ondes, $e_S$ et $e_L$.

D'où, avec K constant,

$$i = K \left| e_S + e_L \right|^2 \qquad (1)$$

où
$$e_S = E_S \cos(\omega_S t + \phi_S) \text{ et} \qquad (2)$$
$$e_L = E_L \cos(\omega_L t + \phi_L)$$

où $\omega_S = 2\pi F_S$ et $\omega_L = 2\pi F_L$, $\phi_L$ et $\phi_S$ sont des phases relatives à un plan $\Pi$ parallèle aux ondes $E_S$ et $E_L$, et $e_S$ et $e_L$ sont les amplitudes. Après filtrage du signal détecté par un filtre 10 centré sur la fréquence f, le signal filtré $i_F$ sera de la forme

$$i_F = K \cos(2\pi f + \phi_L - \phi_S) \qquad (3)$$

Dans le domaine de l'imagerie ou de la détection infrarouge ($\lambda > 1$ μm), on dispose de détecteur dont les détectivités restent réduites et où les causes prédominantes de bruit sont le courant d'obscurité et le bruit thermique. L'emploi d'une détection du type hétérodyne assure néanmoins un rapport signal sur bruit S/B, correspondant au bruit shot du signal incident de puissance $P_S$, à condition que la puissance $P_L$ de l'oscillateur local soit tel que $P_L >> P_S$.

Dans ce cas on a:

$$\frac{S}{B} = \frac{\eta}{\Delta f} \frac{P_s}{hF_s} \qquad (3)$$

Dans cette relation (3) h est la constante de Planck, $\eta$ l'efficacité quantique de détecteur et $\Delta f$ la bande passante du filtre 10.

Si la puissance $P_L$ n'est pas suffisante pour que la relation (3) s'applique, le rapport signal sur bruit $(S/B)_h$ sera tel que:

$$(S/B)_h = (S/B)_d \, P_L/P_S \qquad (4)$$

où $(S/B)_d$ est le rapport signal sur bruit pour une détection directe.

De plus le filtre 10 élimine les fluctuations lentes si f est suffisamment élevé.

Si les deux fronts d'onde $\Sigma_S$ et $\Sigma_L$, après réflexion sur le miroir semi-transparent, font un angle $\Delta\Theta$, les différences de phases dans le plan varient spatialement et l'on ne pourra appliquer la relation (3) que si,

$$\Delta\Theta < \lambda/2R \qquad (5)$$

où $\lambda$ est la longueur d'onde et R le rayon de l'objectif L.

Si l'on prend un diamètre d'objectif de 10 cm, une longueur d'onde de 10 µm, la relation (5) montre que le champ observable par détection hétérodyne est inférieur à $10^{-4}$ radians, cela limite sévèrement une imagerie bidimensionnelle.

Suivant l'invention on conserve les avantages intrinsèques de la détection hétérodyne, tout en assurant un grand champ angulaire compatible avec la formation d'image, détectée par exemple en parallèle sur une matrice de photodétecteurs.

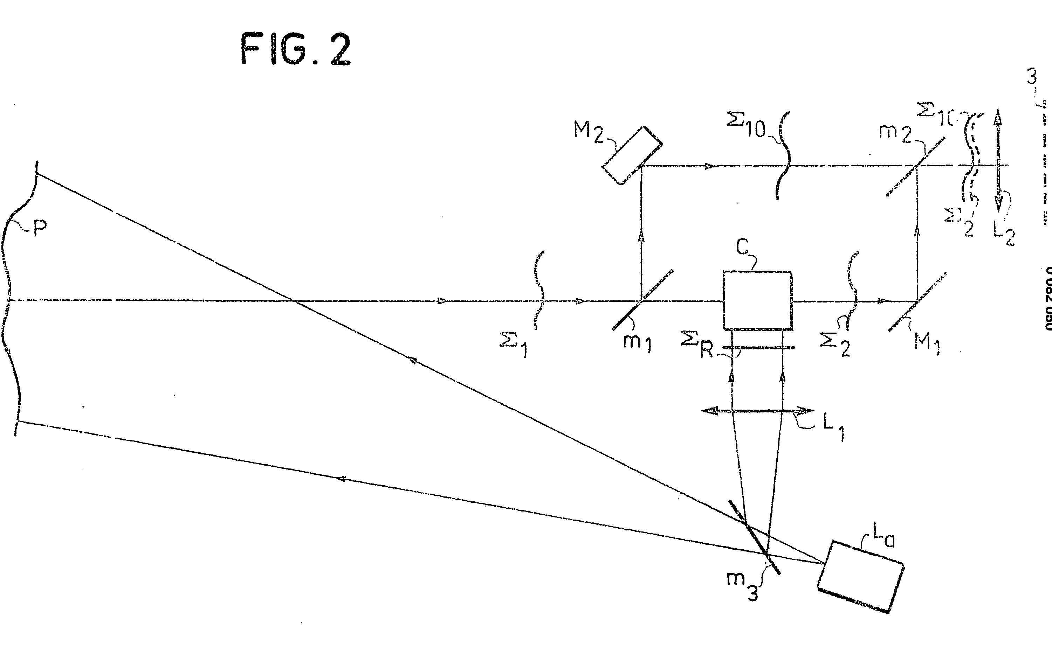

La fig. 2 montre le schéma du dispositif d'hétérodynage, suivant l'invention.

Un laser La éclaire un objet P, qui renvoie un front d'onde $\Sigma_1$. Un miroir semi-transparent $m_1$ laisse passer une partie de $\Sigma_1$ qui tombe sur le cristal amplificateur C. Ce cristal C est éclairé par ailleurs par une onde plane de référence $\Sigma_R$. Le faisceau de référence est prélevé par un miroir semi-transparent $m_3$ sur le faisceau issu du laser La. Un objectif $L_1$ fournit l'onde plane $\Sigma_R$.

L'interaction de l'onde de référence $\Sigma_R$ avec l'onde signal $\Sigma_1$ ayant passé le semi-transparent a pour effet de fournir à la sortie du cristal C une onde amplifiée $\Sigma_2$, identique au facteur d'amplification près à l'onde signal $\Sigma_1$. L'onde réfléchie par le miroir semi-transparent $m_1$ est réfléchie par un miroir $M_2$. Ce miroir $M_2$ est monté par exemple sur un dispositif piézo-électrique auquel on applique une tension en dents de scie. Cela a pour effet de changer la fréquence du front d'onde réfléchie par le miroir $M_2$.

Il est possible également de changer la fréquence en introduisant un déflecteur acoustique sur le faisceau réfléchi par le miroir partiellement réfléchissant $M_1$.

Le front d'onde $\Sigma_{10}$ décalé en fréquence et le front d'onde amplifié $\Sigma_2$, après réflexion sur le miroir $M_1$ et le miroir semi-transparent interfèrent. Un dispositif $L_2$ forme l'image interférentielle sur une matrice de photodétecteurs 3.

La superposition de fronts d'onde semblables, l'un étant décalé en fréquence et l'autre amplifié, permet un hétérodynage sans limitation angulaire.

Les méthodes d'amplification en temps réel d'un front d'onde complexe sont basées sur l'enregistrement instantané d'un hologramme de volume fonctionnant par variation d'indice photo-induite. L'amplification résulte de l'autodiffraction de l'onde de référence $\Sigma_R$ dans le réseau de phase dynamique (fig. 3).

On montre dans le document déjà cité de J.P. Huignard et A. Marrakchi que dans ces conditions l'intensité de l'onde transmise par le milieu d'interaction s'écrit sous la forme:

$$I_2 = I_1 \frac{(1 + \beta) \exp(\Gamma - \alpha)\ell}{\beta + \exp(\Gamma\ell)} \qquad (6)$$

où $\beta = I_R/I_S$, et

$I_1$, $I_2$ et $I_R$ sont respectivement les intensités des ondes $\Sigma_1$, $\Sigma_2$ et de l'onde de référence $\Sigma_R$, $\ell$ est la longueur du cristal, $\alpha$ son coefficient d'absorption et $\Gamma$ le gain.

$\Gamma$ est donné par l'expression:

$$\Gamma = \frac{4\pi \, \Delta n_s}{\lambda \cos\psi} \qquad (7)$$

où $\Delta n_S$ est la variation à saturation et $\psi$ l'angle entre les ondes $\Sigma_1$ et $\Sigma_R$.

Si $\beta$ est très grand l'expression (6) se simplifie et devient:

$$I_2 = I_1 \exp(\Gamma - \alpha)\ell \qquad (8)$$

De l'expression (6) on trouve que la valeur $\ell_o$ de $\ell$, qui donne la plus grande amplification, est telle que:

$$\ell_o = \log_e[\beta(\Gamma/\alpha - 1)] \qquad (9)$$

A titre d'exemple on prend les valeurs numériques suivantes:
— indice de réfraction à saturation, $\Delta n_S = 10^{-4}$
— coefficient d'absorption, $\alpha = 2 \text{ cm}^{-1}$
— angle entre les fronts d'onde dans le milieu, $\cos\psi \simeq 1$
— rapport d'intensité référence sur signal $\beta = 10^9$
On trouve d'après (7) et (9)
$\Gamma = 12 \text{ cm}^{-1}$ et $\ell_o = 10 \text{ mm}$
d'où d'après (8)
$I_2/I_1 = 2 \times 10^4$

Suivant les longueurs d'onde il est possible d'utiliser des variations d'indices photo-induites par les effets physiques suivants:
— effet Kerr optique par exemple dans $CS_2$,
— absorption saturée dans les gaz (vapeur Na; $SF_6$, ...),
— paire électrons-trons dans les semi-conducteurs: (Si, GE, CdS, ...),
— effet photoréfractif: (BSO, $LiNBO_3$, $BaTiO_3$, etc.),
— effets thermiques.

Dans certains milieux, notamment dans le cristal BSO, il est connu que pour avoir une amplification importante il faut réaliser un déphasage entre l'onde de référence et le réseau de variation d'indice, en déplaçant par exemple le cristal ou les strates d'interférence.

Finalement on a décrit un dispositif permettant la détection superhétérodyne sur une image infrarouge bidimensionnelle sans limitation angulaire. L'image pouvant être détectée en parallèle par une mosaïque de photodétecteurs.

Cette détection hétérodyne est maintenue même si le front d'onde incident est perturbé par des fluctuations de la phase, dans la mesure où les constantes de temps mises en jeu restent grandes devant le temps d'inscription $\tau_H$ de l'hologramme. Selon les matériaux $\tau_H$ est variable de $10^{-12}$ à $10^{-3}$ s.

## Revendications

1. Dispositif de détection hétérodyne de l'image optique de cibles éclairées par un laser (La) sur une matrice (3) de photodétecteurs, dans lequel l'onde $\Sigma_1$ issue des cibles donne naissance, dans un milieu à variation d'indice de réfraction (C), à une onde $\Sigma_2$ isomorphe de celle qui émane des cibles et dans lequel l'onde $\Sigma_1$ issue des cibles et l'onde $\Sigma_2$ isomorphe sont focalisées par un objectif ($L_2$) sur la matrice (3) de photodétecteurs, caractérisé en ce que le front d'onde $\Sigma_1$ diffusé par les cibles tombe sur un miroir partiellement réfléchissant ($m_1$), que le front d'onde transmis par le miroir est amplifié dans ce milieu (C), et que le front d'onde réfléchi par le miroir ($m_1$) est incident sur des moyens de changement de fréquence ($M_2$) fournissant un front d'onde $\Sigma_{10}$ décalé en fréquence de la valeur (f), qu'un deuxième miroir partiellement réfléchissant ($m_2$) permet l'interférence entre le front d'onde amplifié $\Sigma_2$ et le front d'onde décalé en fréquence $\Sigma_{10}$, que l'objectif ($L_2$) focalise les fronts d'onde $\Sigma_2$ et $\Sigma_{10}$ sur la matrice de photodétecteurs et que les signaux fournis par les photodétecteurs sont filtrés par des filtres (10) centrés sur la fréquence de battement (f).

2. Dispositif de détection hétérodyne suivant la revendication 1, caractérisé par le fait que le décalage en fréquence est obtenu par un miroir ($M_2$) monté sur un dispositif piézo-électrique auquel est appliquée une tension en dents de scie.

3. Dispositif de détection hétérodyne suivant la revendication 1, caractérisé par le fait que le décalage en fréquence est obtenu par un déflecteur acoustique.

4. Dispositif de détection hétérodyne suivant la revendication 1, caractérisé par le fait que le milieu à variation d'indice de réfraction induite (C) est photoréfractif.

5. Dispositif de détection hétérodyne suivant la revendication 1, caractérisé par le fait que le milieu à variation d'indice de réfraction induite fait intervenir l'effet Kerr optique.

6. Dispositif de détection hétérodyne suivant la revendication 1, caractérisé par le fait que le milieu à variation d'indice de réfraction induite est un gaz présentant une absorption saturée.

7. Dispositif de détection hétérodyne suivant la revendication 1, caractérisé par le fait que le milieu à variation d'indice de réfraction induite est un milieu semi-conducteur.

## Patentansprüche

1. Heterodyn-Detektorvorrichtung zur Erfassung des optischen Bildes von durch einen Laser (La) beleuchteten Zielen auf einer Matrix (3) aus Photodetektoren, wobei die von den Zielen ausgehende Welle $\Sigma_1$ in einem Medium, das eine Brechungsindexänderung aufweist (C), eine Welle $\Sigma_2$ erzeugt, die isomorph mit derjenigen ist, welche von den Zielen ausgeht, und wobei die von den Zielen ausgehende Welle $\Sigma_1$ und die isomorphe Welle $\Sigma_2$ durch ein Objektiv ($L_2$) auf der Matrix (3) von Photodetektoren fokussiert werdern, dadurch gekennzeichnet, dass die durch die Ziele gestreute Wellenfront $\Sigma_1$ auf einen teilreflektierenden Spiegel ($m_1$) fällt, dass die durch den Spiegel durchgelassene Wellenfront in diesem Medium (C) verstärkt wird, dass die durch den Spiegel ($m_1$) reflektierte Wellenfront auf Frequenzänderungsmitteln ($M_2$) auftrifft, die eine Wellenfront $\Sigma_{10}$ liefern, deren Frequenz um den Wert (f) verschoben ist, dass ein zweiter teilreflektierender Spiegel ($m_2$) die Interferenz zwischen der verstärkten Wellenfront $\Sigma_2$ und der frequenzverschobenen Wellenfront $\Sigma_{10}$ gestattet, dass das Objektiv ($L_2$) die Wellenfronten $\Sigma_2$ und $\Sigma_{10}$ auf der Matrix von Photodetektoren fokussiert und dass die von den Photodetektoren gelieferten Signale durch Filter (10) gefiltert werden, welche auf die Schwebungsfrequenz (f) zentriert sind.

2. Heterodyn-Detektorvorrichtung nach Anspruch 1, dadurch gekennzeichnet, dass die Frequenzverschiebung durch einen Spiegel ($M_2$) erhalten wird, der auf einer piezo-elektrischen Vorrichtung montiert ist, an die eine periodische sägezahnförmige Spannung angelegt ist.

3. Heterodyn-Detektorvorrichtung nach Anspruch 1, dadurch gekennzeichnet, dass die Frequenzverschiebung durch einen akustischen Ablenker erhalten ist.

4. Heterodyn-Detektorvorrichtung nach Anspruch 1, dadurch gekennzeichnet, dass das eine induzierte Brechungsindexänderung aufweisende Medium (C) lichtbrechend ist.

5. Heterodyn-Detektorvorrichtung nach Anspruch 1, dadurch gekennzeichnet, dass das eine induzierte Brechungsindexänderung aufweisende Medium auf dem optischen Kerreffekt beruht.

6. Heterodyn-Detektorvorrichtung nach Anspruch 1, dadurch gekennzeichnet, dass das eine induzierte Brechungsindexänderung aufweisende Medium ein Gas ist, das eine gesättigte Absorption aufweist.

7. Heterodyn-Detektorvorrichtung nach Anspruch 1, dadurch gekennzeichnet, dass das eine induzierte Brechungsindexänderung aufweisende Medium ein Halbleitermedium ist.

## Claims

1. Heterodyne device for the detection of an optical image of targets illuminated by a laser (La) on a matrix (3) of photodetectors, wherein the wave $\Sigma_1$ emerging from the targets generates, in a medium presenting a variation of its index of refraction (C), a wave $\Sigma_2$ which is isomorphous with that emerging from the targets, and wherein the wave $\Sigma_1$ emerging from the targets and the isomorphous wave $\Sigma_2$ are focused by an objective ($L_2$) on the matrix (3) of photodetectors, characterized in that the wave front $\Sigma_1$ diffused by the targets is received on a partially reflecting mirror ($m_1$), that the wave front transmitted by the mirror is amplified in this medium (C), and in that the wave front reflected by the mirror ($m_1$) is incident on frequency changing means ($M_2$) suppyling a wave front (10) shifted in frequency by the value (f), a second partially reflecting mirror ($m_2$) permitting to establish interference between the amplified wave front $\Sigma_2$ and the frequency shifted wave front $\Sigma_{10}$, the objective ($L_2$) focusing the wave fronts $\Sigma_2$ and $\Sigma_{10}$ on the matrix of photodetectors and the signals supplied by the photodetectors being filtered by filters (10) centered on the beat frequency (f).

2. Heterodyne detection device according to Claim 1, characterized by the fact that the frequency shift is obtained by a mirror ($M_2$) mounted on a piezoelectric device whereto a periodic sawtooth voltage is applied.

3. Heterodyne detection device according to Claim 1, characterized by the fact that the frequency shift is obtained by an acoustic deflector.

4. Heterodyne detection device according to Claim 1, characterized by the fact the medium presenting an induced variation of its index of refraction (C) is photo-refractive.

5. Heterodyne detection device according to Claim 1, characterized by the fact that the medium presenting an induced variation of its index of refraction is based on the optical Kerr effect.

6. Heterodyne detection device according to Claim 1, characterized by the fact that the medium presenting an inducted variation of its index of refraction is a gas having a saturated absorption.

7. Heterodyne detection device according to Claim 1, characterized by the fact that the medium presenting an induced variation of its index of refraction is a semiconductor medium.

# FIG.1

$E_S \cos \omega_S t$

$\Sigma_S$

M

L

$\eta$

$\Sigma_L$

$E_L \cos \omega_L t$

D

$i$

10

$i_F$

# FIG.3

$\Sigma_1$

$I_1$

$\ell$

$I_2$

$\Sigma_2$

C

$I_R$

$\Sigma_R$

# FIG. 2

0 082 050